# FASCICULE DE BREVET EUROPEEN

(11) **EP 3 247 594 B1**
(45) Date de publication et mention de la délivrance du brevet: **22.08.2018**
(21) Numéro de dépôt: 16700263.3
(22) Date de dépôt: 11.01.2016
(51) Int. Cl.: B60R 21/268, B60R 21/274

(54) **GENERATEUR DE GAZ PYROTECHNIQUE ET DISPOSITIF DE PUERICULTURE CORRESPONDANT**
PYROTECHNISCHEN GASGENERATOR UND ENTSPRECHENDEN KINDERBETREUUNG VORRICHTUNG
PYROTECHNIC GAS GENERATOR AND RESPECTIVE CHILDCARE DEVICE

(30) Priorité: 23.01.2015 FR 1550551
(43) Date de publication de la demande: 29.11.2017
(73) Titulaire: Dorel France, 49309 Cholet Cedex (FR)
(72) Inventeur: GARNIER, Nicolas, 49230 Saint Germain Sur Moine (FR); RABEONY, Haja, 49300 Cholet (FR)
(74) Mandataire: Vidon Brevets & Stratégie
(86) Numéro de dépôt international: PCT/EP2016/050335
(87) Numéro de publication internationale: WO 2016/116308

(56) Documents cités:
- WO-A2-02/094617
- FR-A1- 2 969 055
- US-A1- 2009 045 612

## Description

Le domaine de l'invention est celui de la puériculture, et plus précisément des dispositifs aptes à recevoir un enfant, notamment en position assise.

L'invention concerne en particulier les sièges auto, destinés à être solidarisés à un siège ou une banquette d'un véhicule automobile. Elle peut également être mise en oeuvre dans les dispositifs tels que les poussettes, les nacelles, les sièges pour vélo, etc.

Plus précisément encore, l'invention concerne la mise en oeuvre de coussins, ou ballons, ou encore éléments, de sécurité gonflables, communément appelés « airbag », dont le gonflement est déclenché automatiquement en cas de choc (dans une situation d'accident), pour protéger l'enfant installé dans le dispositif de puériculture.

L'usage des « airbags » est bien connu, notamment dans le domaine de l'automobile. Plus récemment, de nombreuses autres applications ont été envisagées, et notamment pour les sièges auto pour enfant.

Par exemple, le siège auto peut comprendre deux coussins gonflables, logés sur ou dans les bretelles d'un harnais ou sur ou dans des fourreaux montés sur lesdites bretelles, et solidarisables par des moyens de liaison. Une telle approche est décrite par exemple dans le document de brevet FR2969055, au nom du Titulaire de la présente demande de brevet.

En cas de choc, chacun des coussins gonflables est gonflé par un gaz provenant d'une bouteille de gaz sous pression et transmis via un passage de circulation du gaz sous pression.

Les documents décrivant des coussins gonflables pour siège auto prévoient généralement la présence de moyens de détection de chocs pilotant le déclenchement de moyens générateurs de gaz destiné au gonflage des coussins gonflables, mais n'apportent aucune précision sur le fonctionnement de ces moyens générateurs de gaz, et notamment sur la façon dont le gaz est acheminé. Il s'agit pourtant d'un problème crucial. En effet, il est essentiel que les coussins gonflables se déclenchent systématiquement lorsque ceci est nécessaire, et suffisamment rapidement pour assurer la protection de l'enfant. Le document US 2009045612 est considéré comme l'état de la technique le plus proche de l'objet de la revendication 1. Il est en outre essentiel que ces moyens générateurs de gaz soient de conception simple et présentent une compacité optimale.

Des problèmes similaires se rencontrent dans d'autres dispositifs de puériculture.

L'invention a notamment pour objectif de pallier au moins certains de ces inconvénients.

Un objectif de l'invention est de fournir un gaz de gonflage à un ou plusieurs coussins gonflables de façon fiable.

Plus précisément, un objectif de l'invention est de perfectionner les moyens générateurs de gaz connus afin de simplifier leur structure et d'optimiser leur compacité.

Un autre objectif de l'invention est de fournir de tels moyens générateurs de gaz qui soient relativement peu coûteux.

Un autre objectif de l'invention est de fournir un dispositif de puériculture améliorant la sécurité de l'enfant en cas de choc, de façon simple et efficace.

Un autre objectif de l'invention, au moins selon certains modes de réalisation, est de fournir un siège auto assurant un déclenchement fiable, sûr et efficace du ou des coussins gonflables, lorsqu'une situation d'accident se produit.

Ces objectifs, ainsi que d'autres qui apparaîtront par la suite sont atteints à l'aide d'un générateur de gaz pour coussin(s) gonflable(s) comprenant :
- au moins une charge pyrotechnique et des moyens d'allumage/d'activation de ladite charge déclenchés lors d'une condition prédéterminée,
- un réservoir contenant un gaz sous pression et dont l'embouchure est fermée par un élément d'obturation, et
- une ouverture d'évacuation des gaz communiquant avec au moins un coussin gonflable.

Selon l'invention, le générateur de gaz comprend en outre un percuteur situé dans un conduit dans lequel débouche l'ouverture d'évacuation des gaz et qui peut être déplacé dans un premier temps, lorsque la condition prédéterminée est remplie, par les gaz de combustion générés par la charge pyrotechnique en direction de l'élément d'obturation, d'une position initiale vers une position d'ouverture, de façon à percer ce dernier par le biais de moyens de perçage portés par ledit percuteur, ledit percuteur pouvant être ramené, une fois l'élément d'obturation percé, par le gaz sous pression stocké dans le réservoir, vers la position initiale, le gaz sous pression s'échappant du réservoir vers ladite ouverture d'évacuation des gaz.

Il est ainsi possible de fournir un gaz de gonflage à un ou plusieurs coussins gonflables de façon fiable à l'aide d'une structure de générateur de gaz qui soit simple et compacte.

De plus, une telle structure permet de limiter le temps de déploiement des coussins gonflables.

Le générateur de gaz pyrotechnique conforme à l'invention utilise un agent solide de production de gaz de combustion, en tant que source de déplacement d'un percuteur vers une bouteille de gaz sous pression. Une extrémité avant du percuteur sert à percer l'opercule de fermeture de la bouteille de gaz sous pression.

Une fois que la bouteille est percée, le gaz sous pression provoque le déplacement du percuteur dans le sens inverse, le recul du percuteur permettant au gaz sous pression de se diriger vers un orifice d'évacuation des gaz communiquant avec le ou les coussins gonflables. Le gaz stocké sous pression dans la bouteille est ainsi libéré pour gonfler/déployer le ou les coussins.

Une telle structure de générateur de gaz présente en outre un poids réduit.

Selon l'invention, dans la position initiale, le percuteur est situé sur un côté de l'ouverture d'évacuation des gaz, l'embouchure du réservoir étant situé de l'autre côté de l'ouverture d'évacuation des gaz dans le conduit.

Selon un aspect particulier de l'invention, le les moyens de perçage sont entourés par un épaulement destiné à venir en butée contre le pourtour de l'embouchure du réservoir, les moyens de perçage étant dimensionnés pour pénétrer au moins partiellement dans ladite embouchure du réservoir.

Selon l'invention, la charge pyrotechnique est disposée au moins en partie dans un logement ménagé dans ledit percuteur.

Selon un aspect particulier de l'invention, le logement débouche sur une face arrière du percuteur et les moyens de perçage sur la face opposée avant du percuteur.

Selon un aspect particulier de l'invention, lorsque l'épaulement est en butée contre le pourtour de l'embouchure du réservoir, la face arrière du percuteur est située en regard de l'ouverture d'évacuation des gaz de façon à définir un passage des gaz de combustion vers l'ouverture d'évacuation des gaz.

Selon un aspect particulier de l'invention, le l'axe longitudinal de l'ouverture d'évacuation des gaz est sensiblement incliné par rapport à l'axe perpendiculaire à l'axe longitudinal du conduit.

Selon un aspect particulier de l'invention, les moyens de perçage présentent une forme en ogive ou une forme biseautée.

L'invention concerne également un dispositif de puériculture apte à recevoir un enfant comprenant au moins un générateur de gaz tel que décrit précédemment.

Selon un aspect particulier de l'invention, le dispositif de puériculture comprend un harnais présentant deux bretelles destinées à s'étendre à partir des épaules le long du torse d'un enfant, chacune des bretelles portant un élément de sécurité gonflable, apte à se gonfler en cas de choc supérieur à un seuil prédéterminé.

La mise en oeuvre de ces éléments gonflables associés aux bretelles est simple à mettre en oeuvre et à utiliser.

Selon un aspect particulier de l'invention, le dispositif de puériculture comprend un siège, ledit générateur de gaz étant logé dans le dossier, dans au moins un des flans latéraux, et/ou dans l'embase dudit siège.

Lesdits éléments de sécurité gonflables peuvent être alimentés par au moins une source de fluide, par exemple logée dans le dossier dudit siège, dans les flans latéraux, dans l'embase,...

Selon un aspect particulier de l'invention, le dispositif de puériculture est un siège auto, une poussette, une nacelle, ou un siège pour vélo, par exemple.

D'autres caractéristiques et avantages de l'invention apparaîtront plus clairement à la lecture de la description suivante d'un mode de réalisation préférentielle de l'invention, donnée à titre de simple exemple illustratif et non limitatif, et des dessins annexés parmi lesquels :
- la figure 1 illustre un exemple de siège auto mettant en oeuvre un générateur de gaz pyrotechnique conforme à l'invention destinés à gonfler des éléments gonflables portés par le harnais du siège auto ;
- la figure 2 présente le siège auto de la figure 1, les éléments gonflables ayant été déployés ;
- la figure 3 présente l'arrière du siège auto des figures 1 et 2, équipé d'un générateur de gaz pyrotechnique conforme à l'invention permettant le gonflage des éléments gonflables ;
- les figures 4 à 9 illustrent le fonctionnement du générateur de gaz pyrotechnique conforme à l'invention ;
- la figure 10 illustre, de façon schématique, un exemple de pointe de percuteur mis en oeuvre dans le générateur de gaz pyrotechnique conforme à l'invention.

L'invention propose donc un générateur de gaz pyrotechnique pour le gonflage d'un ou de plusieurs coussins de sécurité gonflables (« airbag ») destinés à équiper des dispositifs de puériculture.

Le mode de réalisation décrit par la suite concerne les sièges auto pour enfant.

Cependant, l'homme du métier comprend que la même approche peut aisément être adapté à d'autres dispositifs de puériculture, dès lors qu'ils sont équipés d'un ou de plusieurs coussins de sécurité gonflables.

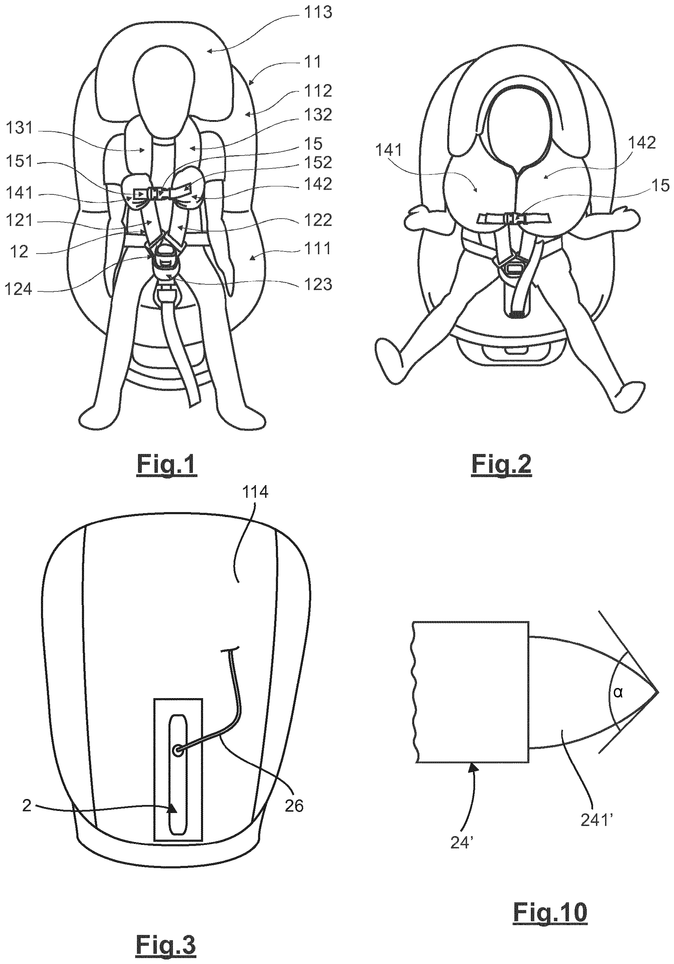

Comme on le voit sur la figure 1, le siège auto pour enfant 11 comprend classiquement une assise 111 et un dossier 112, portant ici une têtière 113, qui peut être mobile en hauteur, par rapport au dossier 112.

L'enfant est maintenu dans ce siège 11 à l'aide d'un harnais 12, comprenant deux bretelles 121 et 122, destinées à être placées chacune sur une des épaules de l'enfant, et s'étendant sensiblement verticalement sur le torse de celui-ci, et une patte d'entrejambes 123.

Lorsque le harnais est mis en place, les deux bretelles 121 et 122 et la patte d'entrejambes 123 sont solidarisés par une boucle de verrouillage 124. Chaque bretelle 121 et 122 porte un fourreau 131, 132, venant prendre position sur les épaules et/ou le haut du corps de l'enfant, pour améliorer son confort et sa sécurité.

Dans le mode de réalisation décrit, chacun de ces fourreaux 131 et 132 contient un élément de sécurité gonflable 141, 142 (dont seule une extrémité est visible sur la figure 1, et dépasse des fourreaux). Le reste des éléments de sécurité gonflables est plié et logé dans les fourreaux, de façon à se déployer de façon efficace, en cas de choc. Les extrémités des éléments de sécurité gonflable 141, 142 sont reliées par des moyens de solidarisation 15, les solidarisant l'un à l'autre, comprenant deux portions souples, ou lanières, 151 et 152 équipées chacune d'un élément de boucle respectivement mâle et femelle.

En cas de choc important, supérieur à un seuil prédéterminé, les deux éléments de sécurité gonflables 141 et 142 se déploient automatiquement et très rapidement, depuis les fourreaux 131 et 132, pour protéger notamment la tête de l'enfant, et limiter sa course vers l'avant, comme illustré sur la figure 2.

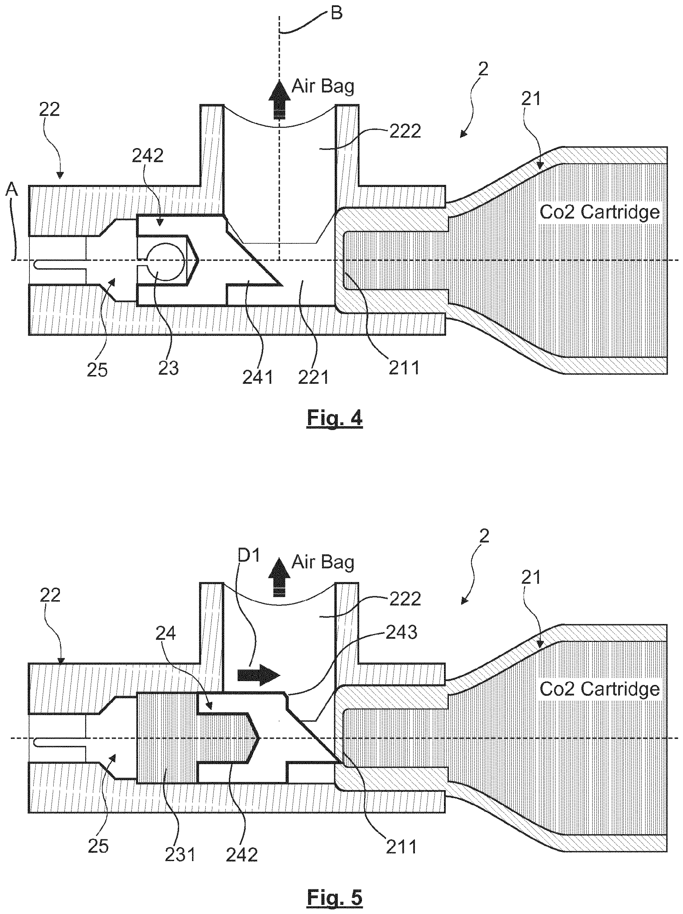

Les deux éléments de sécurité gonflables 141 et 142 sont alimentés par des moyens de gonflage sous la forme d'un générateur de gaz 2 pyrotechnique, dont le fonctionnement est décrit par la suite en relation avec les figures 4 à 9.

Comme illustré sur la figure 3, le générateur de gaz 2 peut être logé dans le dossier 114 du siège 11 dans un logement prévu à cet effet. Ce logement peut, selon les cas, être placé dans le dossier, l'assise ou l'embase du siège auto, ou à tout emplacement adéquat.

Comme illustré sur les figures 3 et 4, le générateur de gaz 2 comprend un corps creux 22 comprenant un conduit horizontal 221 cylindrique dans lequel débouche un conduit, ou ouverture, 222 d'évacuation des gaz. Ce conduit 222 est ici cylindrique mais peut présenter d'autres formes. On a représenté sur la figure 4 l'axe longitudinal A du conduit horizontal 221 et l'axe longitudinal B du conduit 222 d'évacuation des gaz. Ces deux axes A, B sont ici disposés à 90°, mais d'autres valeurs d'inclinaison du conduit 222 par rapport au conduit 221 sont possibles. Ainsi, le conduit 222 d'évacuation des gaz peut être disposé de façon oblique par rapport à l'axe longitudinal A du conduit horizontal 221.

Une extrémité ouverte du conduit horizontal 221, située à droite du conduit 222 d'évacuation des gaz, est destinée à recevoir le col d'une bonbonne 21 d'un fluide adapté. Le fluide contenu dans la bonbonne peut notamment être un gaz tel que le dioxyde de carbone (CO₂), l'hélium, l'azote, ou toute autre fluide adapté pour permettre le gonflement immédiat des deux éléments de sécurité gonflables 141, 142. Le col de la bouteille peut être vissé dans l'extrémité ouverte du conduit horizontal 221.

Une première extrémité d'un tube diffuseur de gaz 26, qui est ici un conduit souple, est relié à l'entrée d'alimentation de fluide (non représentée) des éléments de sécurité gonflables 141, 142, sa deuxième extrémité étant relié au conduit 222 d'évacuation des gaz du générateur de gaz 2.

Outre la réserve de gaz (bouteille de gaz) 21, le générateur de gaz 2 comprend un ensemble pyrotechnique monté dans l'autre extrémité du conduit horizontal 221, située à gauche du conduit 222 d'évacuation des gaz. Cet ensemble pyrotechnique est constitué d'une charge pyrotechnique (ou explosive) 23, de moyens d'allumage 25 de la charge pyrotechnique 23 et d'un percuteur 24, représentés sur la figure 4.

La charge pyrotechnique 23 se présente sous la forme d'un bloc monolithique de combustible (du propergol par exemple) qui produit du gaz en étant allumé et en brûlant. La charge pyrotechnique 23 est située dans une chambre de combustion 242 ménagée à l'intérieur du percuteur 24, ce qui permet de limiter l'encombrement du générateur de gaz 2. La chambre de combustion 242 débouche dans la surface arrière 244 plane du percuteur 24 qui est, dans la position de la figure 4, en contact avec les moyens d'allumage 25.

Le percuteur 24 (appelé également "balle") cylindrique est mobile en coulissement selon deux directions opposées dans le conduit horizontal 221 et présente, dans cet exemple, à l'avant, une pointe biseautée 241 perforante (une autre forme peut être envisagée, notamment une forme en ogive) orientée vers la bonbonne 21. La pointe biseautée 241 comprend une surface inclinée par rapport à l'axe longitudinal A du conduit horizontal 221 et orientée vers le conduit 222 d'évacuation des gaz. La pointe perforante 241 est entourée par une collerette annulaire 243.

Dans la position initiale de la figure 4, cette partie perforante 241 est située en regard du conduit 222 d'évacuation des gaz, à distance de l'opercule 211 de fermeture de la bonbonne 21.

Bien que ceci ne soit pas illustré sur les figures, le générateur de gaz 2 est piloté par un microcontrôleur/unité de contrôle électronique (ECU). En cas de besoin (choc, accident, décélération supérieure à un seuil prédéterminé,...), le microcontrôleur est apte à émettre une consigne de déclenchement du générateur de gaz 2, sous la forme d'un signal électrique qui est transmis aux moyens d'allumage 25, de façon à assurer le gonflement des deux éléments de sécurité gonflables 141 et 142. Le déclenchement du gonflage lors d'un choc ne doit bien sur se faire qu'en cas de choc suffisamment important. Un seuil prédéterminé adapté est donc défini.

Si ce seuil prédéterminé est dépassé, les moyens d'allumage 25 déclenchent la combustion de la charge pyrotechnique 23 dans la chambre de combustion 242. Comme illustré par la flèche D1 de la figure 5, une fois que le gaz de combustion 231 occupe entièrement le volume de la chambre de combustion 242, il provoque le déplacement du percuteur 24 dans le conduit horizontal 221, vers la bonbonne 21 (c'est-à-dire de la gauche vers la droite sur la figure 5).

Dans la position illustrée sur la figure 5, l'extrémité de la partie perforante 241 du percuteur 24 est en contact avec l'opercule 211 de fermeture de la bonbonne 21, et le gaz de combustion 231 est contenu dans l'espace fermé situé entre les moyens d'allumage 25 et le percuteur 24.

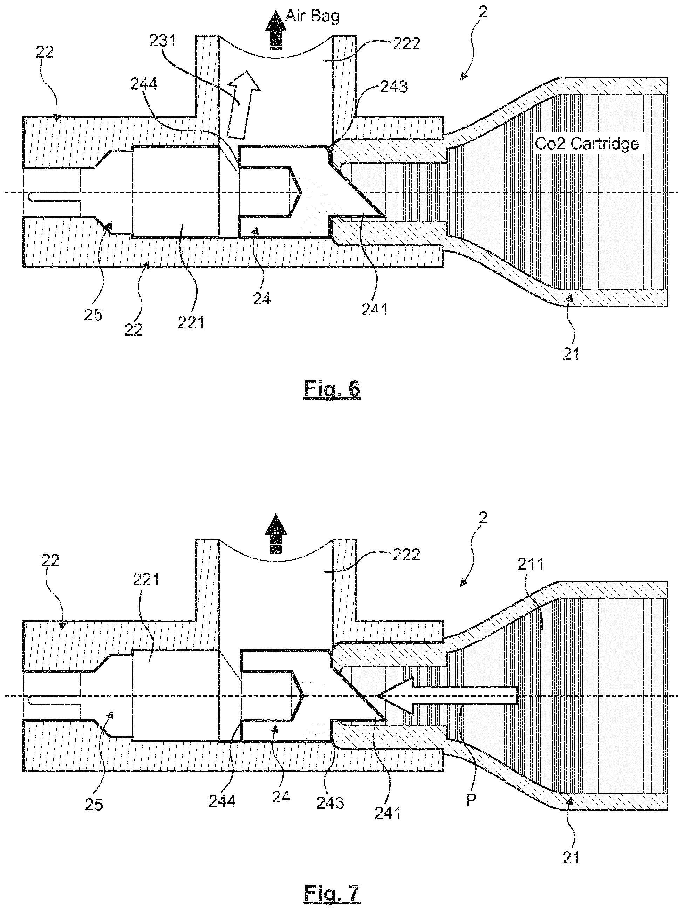

Sur la figure 6, le percuteur 24 s'est encore déplacé vers la bonbonne 21 sous l'effet du gaz de combustion 231 et se trouve dans une position d'ouverture. La surface arrière 244 du percuteur 24 est située en regard du conduit 222 d'évacuation des gaz. Le gaz de combustion 231 s'est échappé dans le conduit 222 d'évacuation des gaz communiquant avec le tube 26 et les airbags. Le dégazage de la charge pyrotechnique 23 se fait donc vers les airbags. La partie perforante 241 du percuteur 24 a percé l'opercule 211 de fermeture de la bonbonne 21 et est située dans le col de la bonbonne 21. La collerette 243 est en butée contre le col de la bonbonne 21, permettant ainsi de maintenir le corps du percuteur 24 hors de la bonbonne 21 et au percuteur 24 de reculer pour diriger le gaz sous pression 211 vers les airbags.

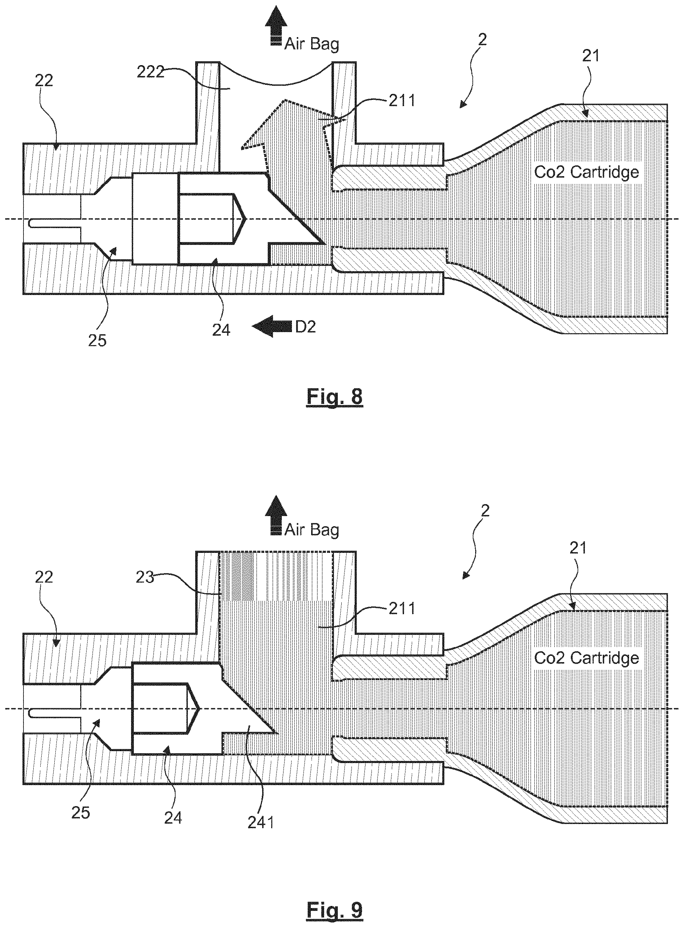

La bonbonne 21 étant ouverte et le gaz de combustion 231 étant purgé, comme illustré sur la figure 7, le gaz sous pression 211 stocké dans la bonbonne 21 applique une pression P suffisante sur la partie perforante 241 du percuteur 24 pour faire reculer ce dernier dans le conduit horizontal 221 (c'est-à-dire pour le déplacer dans le sens inverse, de la bonbonne 21 vers les moyens d'allumage 25). A mesure que le percuteur 24 recule vers sa position initiale (comme illustré par la flèche D2 sur la figure 8), le gaz sous pression issu de la bonbonne 21 est dirigé dans le conduit 222 d'évacuation des gaz et assure le gonflement des airbags.

Ainsi, sous l'effet du gaz sous pression 211, le percuteur 24 recule vers une position de guidage du gaz sous pression 211 pour libérer le gaz sous pression 211 dans le conduit 222 d'évacuation des gaz (figure 8).

Sur la figure 9, le percuteur 24 a reculé jusque dans sa position initiale et le gaz sous pression 211 se dirige dans le conduit 222 d'évacuation des gaz, le plan de la collerette se trouvant au niveau de l'angle formé par le conduit 222 d'évacuation des gaz et le conduit horizontal 221.

Il est à noter que le percuteur 24 peut prendre une position intermédiaire située entre la position initiale (figure 4) et la position d'ouverture de la bonbonne 21 (figures 6 et 7).

### Autres aspects et variantes

Dans le mode de réalisation décrit ci-dessus, le percuteur 24 présente une pointe biseautée 241.

Un percuteur présentant une extrémité en pointe ou en forme de pyramide peut être mis en oeuvre. Toutefois, bien que l'homme du métier envisagerait logiquement ces formes pour percer un opercule, les inventeurs ont constaté que de telles formes ne permettent pas une ouverture optimale de l'opercule de la bonbonne.

Il a toutefois été constaté par les inventeurs qu'une forme en ogive permet une ouverture optimale de l'opercule 211 de la bonbonne 21 et une meilleure circulation du gaz autour de la pointe de l'ogive. Un percuteur 24' présentant une extrémité avant 241' en forme d'ogive est illustré sur la figure 10. L'angle α (alpha) des deux arcs de cercle formant l'extrémité en ogive peut être plus ou moins important que celui illustré sur la figure 10.

On note que le percuteur 24 est monté "serré" en partie arrière (c'est-à-dire du côté des moyens d'allumage) pour assurer un maintien de celui-ci pendant toute la vie du siège auto. Le reste du corps du percuteur 24 est monté avec du jeu pour faciliter son déplacement lors du déclenchement de la charge notamment.

Par ailleurs, l'invention ne s'applique pas uniquement au siège auto, mais peut également être mise en oeuvre dans d'autres dispositifs de puériculture, tels que les poussettes, les nacelles, les sièges pour vélo.

## Revendications

1. Générateur de gaz (2) pour coussin(s) gonflable(s) d'un dispositif de puériculture comprenant :
- au moins une charge pyrotechnique (23) et des moyens d'allumage/d'activation (25) de ladite charge (23) déclenchés lors d'une condition prédéterminée,
- un réservoir (21) contenant un gaz sous pression (211) et dont l'embouchure est fermée par un élément d'obturation (211), et
- une ouverture d'évacuation (222) des gaz communiquant avec au moins un coussin gonflable (141, 142),
le générateur de gaz (2) comprenant en outre un percuteur (24) situé dans un conduit (221) dans lequel débouche l'ouverture d'évacuation (222) des gaz et qui peut être déplacé dans un premier temps, lorsque la condition prédéterminée est remplie, par les gaz de combustion (231) générés par la charge pyrotechnique (23) en direction de l'élément d'obturation (211), d'une position initiale vers une position d'ouverture, de façon à percer ce dernier par le biais de moyens de perçage (241) portés par ledit percuteur (24),
ledit percuteur (24) pouvant être ramené, une fois l'élément d'obturation (211) percé, par le gaz sous pression (211) stocké dans le réservoir (21), vers la position initiale, le gaz sous pression (211) s'échappant du réservoir (21) étant dirigé vers ladite ouverture d'évacuation (222) des gaz,
**caractérisé en ce que**, dans la position initiale, le percuteur (24) est situé sur un côté de l'ouverture d'évacuation (222) des gaz, l'embouchure du réservoir (21) étant situé de l'autre côté de l'ouverture d'évacuation (222) des gaz dans le conduit (221),
et **en ce que** la charge pyrotechnique (23) est disposée au moins en partie dans un logement (242) ménagé dans ledit percuteur (24).

2. Générateur de gaz (2) selon la revendication 1, **caractérisé en ce que** les moyens de perçage (241) sont entourés par un épaulement (243) destiné à venir en butée contre le pourtour de l'embouchure du réservoir (21), les moyens de perçage (241) étant dimensionnés pour pénétrer au moins partiellement dans ladite embouchure du réservoir (21).

3. Générateur de gaz (2) selon la revendication 1 ou 2, **caractérisé en ce que** le logement (242) débouche sur une face arrière (244) du percuteur (24) et les moyens de perçage (241) sur la face opposée avant du percuteur (24).

4. Générateur de gaz (2) selon la revendication 3, **caractérisé en ce que** lorsque l'épaulement (243) est en butée contre le pourtour de l'embouchure du réservoir (21), la face arrière (244) du percuteur (24) est située en regard de l'ouverture d'évacuation (222) des gaz de façon à définir un passage des gaz de combustion (231) vers l'ouverture d'évacuation (222) des gaz.

5. Générateur de gaz (2) selon la revendication 3 ou 4, **caractérisé en ce que** l'axe longitudinal (B) de l'ouverture d'évacuation (222) des gaz est sensiblement incliné par rapport à l'axe perpendiculaire à l'axe longitudinal (A) du conduit (221).

6. Générateur de gaz (2) selon l'une des revendications 1 à 5, **caractérisé en ce que** les moyens de perçage (241) présentent une forme en ogive ou une forme biseautée.

7. Dispositif de puériculture apte à recevoir un enfant comprenant au moins un générateur de gaz (2) selon l'une des revendications 1 à 6.

8. Dispositif de puériculture selon la revendication 7, **caractérisé en ce qu'**il comprend un harnais (12) présentant deux bretelles (121, 122) destinées à s'étendre à partir des épaules le long du torse d'un enfant, chacune des bretelles (121, 122) portant un élément de sécurité gonflable (141, 142), apte à se gonfler en cas de choc supérieur à un seuil prédéterminé.

9. Dispositif de puériculture selon la revendication 7 ou 8, **caractérisé en ce qu'**il comprend un siège, ledit générateur de gaz (2) étant logé dans le dossier (114), dans au moins des flans latéraux, et/ou dans l'embase dudit siège.

10. Dispositif de puériculture selon l'une des revendications 7 à 9, **caractérisé en ce qu'**il s'agit d'un siège auto, d'une poussette, d'une nacelle, ou d'un siège pour vélo.

## Patentansprüche

1. Gasgenerator (2) für aufblasbare Kissen einer Kinderbetreuungsvorrichtung umfassend:
- wenigstens eine pyrotechnische Ladung (23) und Mittel zum Zünden/Aktivieren (25) der Ladung (23), die bei einer vorbestimmten Bedingung ausgelöst werden,
- ein Reservoir (21), das ein Gas unter Druck (211) enthält und dessen Öffnung durch ein Verschlusselement (211) verschlossen ist und
- eine Gasevakuierungsöffnung (222), die mit wenigstens einem aufblasbaren Kissen (141, 142) kommuniziert,
wobei der Gasgenerator (2) ferner einen Schlagbolzen (24) aufweist, der in einem Kanal (221) angeordnet ist, in welchen die Gasevakuierungsöffnung (222) mündet, und der in einem ersten Schritt, wenn die vorbestimmte Bedingung erfüllt ist, durch die Verbrennungsgase (231), die durch die pyrotechnische Ladung (23) erzeugt werden, in Richtung des Verschlusselementes (211) von einer Anfangsposition zu einer Öffnungsposition verlagert werden kann, um das letztere mittels einem durch den Schlagbolzen (24) getragenen Durchstoßmittel (241) zu durchstoßen,
wobei der Schlagbolzen (24), wenn das Verschlusselement (211) durchstoßen ist, durch das in dem Reservoir (21) gespeicherte Gas unter Druck (211) in Richtung der Anfangsposition zurückgeführt werden kann, wobei das Gas unter Druck (211), das aus dem Reservoir (21) austritt, in Richtung der Gasevakuierungsöffnung (222) gerichtet ist,
**dadurch gekennzeichnet, dass** der Schlagbolzen (24) in der Anfangsposition auf einer Seite der Gasevakuierungsöffnung (222) angeordnet ist, wobei sich die Öffnung des Reservoirs (21) auf der anderen Seite der Gasevakuierungsöffnung (222) in dem Kanal (221) befindet,
und dadurch, dass die pyrotechnische Ladung (23) wenigstens teilweise in einem Gehäuse (242) angeordnet ist, das in dem Schlagbolzen (24) ausgebildet ist.

2. Gasgenerator (2) nach Anspruch 1, **dadurch gekennzeichnet, dass** die Durchstoßmittel (241) von einer Schulter (243) umgeben sind, die vorgesehen ist, in Anschlag mit dem Rand der Öffnung des Reservoirs (21) zu kommen, wobei die Durchstoßmittel (241) dimensioniert sind, um wenigstens teilweise in die Öffnung des Reservoirs (21) einzudringen.

3. Gasgenerator (2) nach Anspruch 1 oder 2, **dadurch gekennzeichnet, dass** das Gehäuse (242) an einer hinteren Fläche (244) des Schlagbolzens (24) und die Durchstoßmittel (241) an der gegenüberliegenden vorderen Fläche des Schlagbolzens (24) ausgebildet sind.

4. Gasgenerator (2) nach Anspruch 3, **dadurch gekennzeichnet, dass** dann, wenn die Schulter (243) in Anschlag mit dem Rand der Öffnung des Reservoirs (21) steht, die hintere Fläche (244) des Schlagbolzens (24) derart bezüglich der Gasevakuierungsöffnung (222) angeordnet ist, dass ein Durchgang für Verbrennungsgase (231) in Richtung der Gasevakuierungsöffnung (222) definiert ist.

5. Gasgenerator (2) nach Anspruch 3 oder 4, **dadurch gekennzeichnet, dass** eine Längsachse (B) der Gasevakuierungsöffnung (222) im Wesentlichen bezüglich einer zu einer Längsachse (A) des Kanals (221) senkrechten Achse geneigt ist.

6. Gasgenerator (2) nach einem der Ansprüche 1 bis 5, **dadurch gekennzeichnet, dass** die Durchstoßmittel (241) eine Spitzbogenform oder eine abgeschrägte Form aufweisen.

7. Kinderbetreuungsvorrichtung, die dazu geeignet ist, ein Kind aufzunehmen, wobei die Vorrichtung wenigstens einen Gasgenerator (2) nach einem der Ansprüche 1 bis 6 aufweist.

8. Kinderbetreuungsvorrichtung nach Anspruch 7, **dadurch gekennzeichnet, dass** sie ein Geschirr (12) mit zwei Gurten (121, 122), die dazu bestimmt sind, sich von den Schultern entlang des Torsos eines Kindes zu erstrecken, aufweist, wobei jeder der Gurte (121, 122) ein aufblasbares Sicherheitselement (141, 142) trägt, das dazu geeignet ist, sich im Falle eines Stoßes, der größer als ein vorbestimmter Schwellwert ist, aufzublasen.

9. Kinderbetreuungsvorrichtung nach Anspruch 7 oder 8, **dadurch gekennzeichnet, dass** sie einen Sitz aufweist, wobei der Gasgenerator (2) in der Rückenlehne (114), in wenigstens den Seitenteilen und/oder in der Basis des Sitzes angeordnet ist.

10. Kinderbetreuungsvorrichtung nach einem der Ansprüche 7 bis 9, **dadurch gekennzeichnet, dass** es sich um einen Fahrzeugsitz, einen Kinderwagen, eine Babywanne oder einen Fahrradsitz handelt.

## Claims

1. Gas generator (2) for airbag(s) comprising:
- at least one pyrotechnic charge (23) and means for igniting/activating (25) said charge (23) triggered during a predetermined condition,
- a reservoir (21) containing a pressurised gas (211) and of which the mouth is closed by a sealing member (211), and
- an opening for evacuating (222) gases that communicates with at least one airbag (141, 142),
the gas generator (2) further comprising a striker (24) located in a duct (221) wherein exits the opening for evacuating (222) gases and which can be displaced in a first step, when the predetermined condition is fulfilled, by the combustion gases (231) generated by the pyrotechnic charge (23) in the direction of the sealing member (211), from an initial position to an open position, so as to pierce the latter using means for piercing (241) carried by said striker (24),
said striker (24) able to be returned, once the sealing member (211) is pierced, by the pressurised gas (211) stored in the reservoir (21), to the initial position, the pressurised gas (211) escaping from the reservoir (21) being directed towards said opening for evacuating (222) gases,
**characterised in that**, in the initial position, the striker (24) is located on one side of the opening for evacuating (222) gases, with the mouth of the reservoir (21) being located on the other side of the opening for evacuating (222) gases in the duct (221), and **in that** the pyrotechnic charge (23) is arranged at least partially in a housing (242) arranged in said striker (24).

2. Gas generator (2) according to claim 1, **characterised in that** the means for piercing (241) are surrounded by a shoulder (243) intended to abut against the edges of the mouth of the reservoir (21), the means for piercing (241) being sized to penetrate at least partially into said mouth of the reservoir (21).

3. Gas generator (2) according to claim 1 or 2, **characterised in that** the housing (242) exits onto a rear face (244) of the striker (24) and the means for piercing (241) onto the opposite front face of the striker (24).

4. Gas generator (2) according to claim 3, **characterised in that** when the shoulder (243) is abutting against the edges of the mouth of the reservoir (21), the rear face (244) of the striker (24) is located opposite the opening for evacuating (222) gases in such a way as to define a passage for the combustion gases (231) towards the opening for evacuating (222) gases.

5. Gas generator (2) according to claim 3 or 4, **characterised in that** the longitudinal axis (B) of the opening for evacuating (222) gases is substantially inclined in relation to the axis perpendicular to the longitudinal axis (A) of the conduit (221).

6. Gas generator (2) according to one of claims 1 to 5, **characterised in that** the means for piercing (241) has an ogive shape or a bevelled shape.

7. Child care device able to receive a child comprising at least one gas generator (2) according to one of claims 1 to 6.

8. Child care device according to claim 7, **characterised in that** it comprises a harness (12) having two shoulder straps (121, 122) intended to be extended from the shoulders along the torso of a child, with each one of the shoulder straps (121, 122) bearing an inflatable safety element (141, 142), able to be inflated in case of an impact greater than a predetermined threshold.

9. Child care device according to claim 7 or 8, **characterised in that** it comprises a seat, said gas generator (2) being housed in the seat back (114), in at least lateral flanks, and/or in the base of said seat.

10. Child care device according to one of claims 7 to 9, **characterised in that** it is a car seat, a stroller, a nacelle, or a seat for a bicycle.
